# EUROPÄISCHE PATENTSCHRIFT

(11) **EP 0 810 131 B1**
(45) Veröffentlichungstag und Bekanntmachung des Hinweises auf die Patenterteilung: **25.07.2001**
(21) Anmeldenummer: 97107544.5
(22) Anmeldetag: 07.05.1997
(51) Int. Cl.: B60R 22/22

(54) **Verankerung für das Gurtschloss eines Sicherheitsgurtes**
Means anchoring the buckle of a safety belt
Dispositif d'ancrage de boucle de ceinture de sécurité

(30) Priorität: 28.05.1996 DE 29609436 U
(43) Veröffentlichungstag der Anmeldung: 03.12.1997
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- WO-A-83/03551
- AU-A- 8 424 775
- DE-A- 2 702 229
- FR-A- 2 540 054
- GB-A- 2 183 450
- US-A- 4 638 534

## Beschreibung

Die Erfindung betrifft eine Verankerung für ein neben einem Fahrzeugsitz angeordnetes, seitlich auslenkbares Gurtschloß in einem Sicherheitsgurtsystem mit einem biegsamen Beschlagteil, an dessen einem Ende der Schloßkopf befestigt ist und dessen anderes Ende am Fahrzeug befestigt ist.

Gurtschlösser werden üblicherweise am Fahrzeugsitz oder am Fahrzeugboden durch flexible Zugseile verankert, die nach dem Einstecken der Steckzunge in den Schloßkopf eine Ausrichtung des Gurtschlosses zur Annäherung an den Gurtbandverlauf zulassen. Je geringer die Kräfte sind, die der seitlichen Auslenkung des Gurtschlosses entgegengesetzt sind, desto besser gelingt die Angleichung der Orientierung des Gurtschlosses an den Gurtbandverlauf. Wenn aber der seitlichen Auslenkung des Gurtschlosses ein geringes Biegemoment entgegensteht, so kann das Gurtschloß beim Einstecken der Steckzunge seitlich ausweichen. Man ist daher gezwungen, die Biegesteifigkeit der Schloßverankerung größer auszulegen als es für einen optimalen Gurtbandverlauf erwünscht wäre.

Aus der gattungsbildenden FR-A-2540054 ist eine Vorrichtung für ein Gurtschloß bekannt, bei dem das Schloß schwenkbar an dem oberen Ende eines langgestreckten und aufrechtstehenden Beschlagteils aus Blech angebracht ist. Diese schwenkbare Lagerung ist mittels einer Schenkelfeder ausgeführt, die dafür sorgt, daß das Schloß in einer festen Grundposition bei nicht eingeschobener Steckzunge bleibt bzw. daß das Schloß gegen die Federkraft bei eingerasteter Steckzunge zum Fahrzeugsitz hin geschwenkt werden kann.

Die Erfindung schafft eine Verankerung für ein Gurtschloß eines Sicherheitsgurtes, das sich zum Fahrzeuginsassen hin relativ leicht schwenken läßt, das jedoch in der Gegenrichtung relativ schwer bewegt werden kann. Damit erlaubt es die Verankerung einerseits, daß sich das Gurtschloß an den Verlauf des Sicherheitsgurtes anpassen kann, sie erschwert andererseits jedoch ein Verstellen der Grundposition des Gurtschlosses, wenn die Steckzunge nicht eingeklinkt ist. Bei einer Verankerung der eingangs genannten Art wird dies erfindungsgemäß dadurch erreicht, daß das Beschlagteil zwischen einer Grundstellung bei nicht in den Schloßkopf eingerasteter Steckzunge und einer bei in den Schloßkopf eingerasteter Steckzunge an den Fahrzeugsitz angenäherten Stellung derart elastisch auslenkbar ist, daß das Beschlagteil seiner Auslenkung zum Fahrzeugsitz hin einen geringeren Widerstand entgegensetzt als vom Fahrzeugsitz fort.

Gemäß einer Ausgestaltung der Erfindung ist ein elastisch auslenkbares Abstützteil vorgesehen, das an der Seite des Beschlagteils, die in montiertem Zustand von einem zugeordneten Fahrzeugsitz weg gerichtet ist, an das Beschlagteil anschließt und das Biegewiderstandsmoment der Verankerung in Richtung Abstützteil erhöht. Das zusätzlich vorgesehene Abstützteil erhöht in eingebautem Zustand der Verankerung deren Biegewiderstandsmoment in Richtung seitlich vom zugeordneten Fahrzeugsitz weg, wogegen das Gurtschloß ohne Aufwendung größerer Kräfte zum Fahrzeugsitz hin verstellt werden kann.

Gemäß der bevorzugten Ausführungsform liegt das Abstützteil am vorzugsweise elastisch auslenkbaren Beschlagteil in nichtgebogenem Zustand, d.h. in der Grundstellung im Fahrzeug, vorgespannt an. Damit wird vermieden, daß in der Verankerung Klappergeräusche im Fahrbetrieb entstehen.

Gemäß einer weiteren bevorzugten Ausführungsform bilden das Beschlag-und das Abstützteil für sich und/oder zusammen ein Blattfederpaket, wobei das Abstützteil nur an seinem fahrzeugbodenseitigen Ende an das Beschlagteil gekoppelt ist und mit seinem gurtschloßseitigen Ende am Beschlagteil anliegt. Damit steigert das Abstützteil nur in einer Richtung den Biegewiderstand.

Das gurtschloßseitige Ende des Abstützteils ist zum Beschlagteil hin vorteilhafterweise gerundet, so daß der Verschleiß aufgrund der

Relativbewegungen der beiden Teile zueinander verringert wird und ein Verkleben der Teile aneinander durch Schmutz oder Korrosion zwischen den Teilen weitgehend verhindert werden kann.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Seitenansicht einer in einem Fahrzeug befestigten erfindungsgemäßen Verankerung für ein Gurtschloß,
- Figur 2 das fahrzeugbodenseitige Ende einer zweiten Ausführungsform der erfindungsgemäßen Verankerung mit einem kurzen Abstützteil,
- Figur 3 eine dritte Ausführungsform der Verankerung, die Gurtbänder aufweist,
- Figur 4 eine Draufsicht auf eine vierte Ausführungsform der Verankerung, bei der Beschlagteil und Abstützteil einstückig ausgebildet sind, und
- Figur 5 eine Seitenansicht der in Figur 4 gezeigten Verankerung.

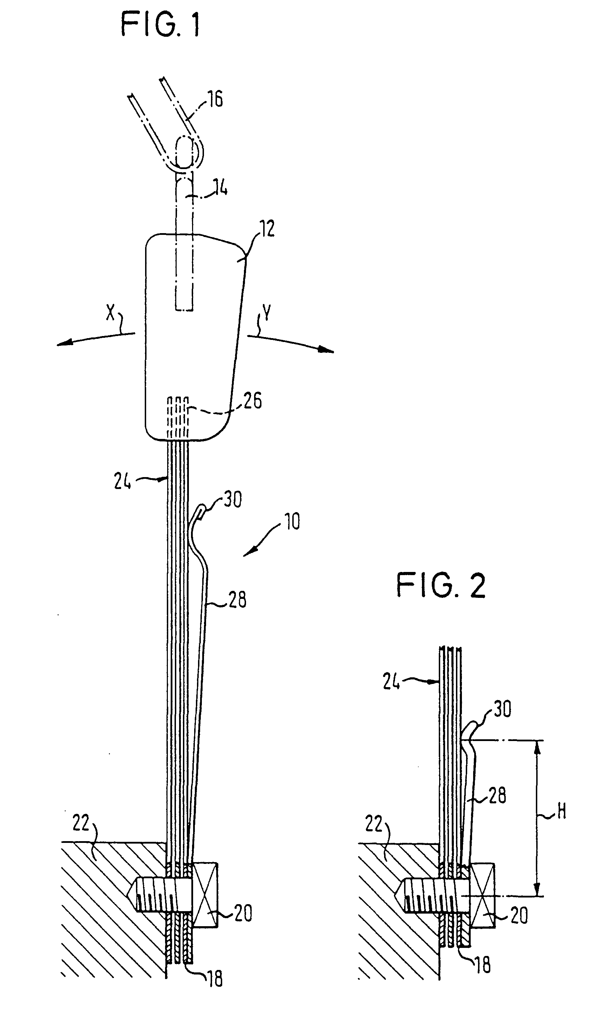

In Figur 1 ist eine Verankerung 10 für ein Gurtschloß 12 gezeigt. Eine Steckzunge 14 eines Sicherheitsgurtes 16 ist in der in Figur 1 gezeigten Stellung in das Gurtschloß 12 eingeklinkt. Am fahrzeugbodenseitigen Ende 18 der Verankerung 10 ist diese durch eine Schraube 20 mit dem Rahmen 22 eines sich in Richtung X erstreckenden, nicht gezeigten Fahrzeugsitzes verbunden. Die Verankerung 10 weist ein Beschlagteil 24 auf, das aus mehreren aneinander anliegenden Blattfedern besteht und an dessen gurtschloßseitigem Ende 26 das Gurtschloß 12 befestigt ist. Die Verankerung 10 umfaßt ferner ein elastisch auslenkbares Abstützteil 28, das auf der dem zugeordneten Fahrzeugsitz abgewandten Seite des Beschlagteils 24 an diesem vorgespannt anliegt. Das Abstützteil 28 ist ebenfalls als Blattfeder ausgebildet. Es ist so bleibend verformt, daß es nach Befestigung am Beschlagteil 24 durch die gemeinsame Schraube 20 mit seinem gurtschloßseitigen Ende 30 gegen das Beschlagteil 24 drückt. Das gurtschloßseitige Ende 30 ist in Richtung zum Beschlagteil 24 bogenförmig verformt, so daß sich ein reibungsarmer Linienkontakt zwischen dem Abstützteil 28 und dem Beschlagteil 24 im Bereich des Endes 30 ergibt. Durch Beschichten zumindest des Abstützteils 28 an seinem Ende 30 wird die Reibung zwischen dem Beschlagteil 24 und dem Abstützteil 28 weiter vermindert.

Das Beschlagteil 24 und das Abstützteil 28 ergeben zusammen ein Blattfederpaket, wobei das Beschlagteil 24 und das Abstützteil 28 für sich aus einer einzelnen Blattfeder oder aus einem separaten Blattfederpaket bestehen können. Durch die Anzahl der aneinanderliegenden Blattfedern, deren Dimensionierung sowie deren Werkstoffauswahl läßt sich das Biegewiderstandsmoment der Verankerung 10 in Richtung X, d.h. in Richtung zum Fahrzeugsitz, und in Richtung Y, d.h. in Richtung weg vom Fahrzeugsitz, beliebig wählen. Da das Abstützteil 28 nur am fahrzeugbodenseitigen Ende 18 mit dem Beschlagteil 24 verbunden ist und am gurtschloßseitigen Ende 30 am Beschlagteil 24 anliegt, wirkt das Abstützteil 28 einer Biegung der Verankerung 10 nur in Richtung Y entgegen, nicht jedoch in Richtung X. In Richtung Y stabilisiert das Abstützteil 28 die Lage des Beschlagteils 24, so daß ein Fahrzeuginsasse beim Angurten die Steckzunge 14 leichter in das Gurtschloß 12 einklinken kann, da dieses nicht seitlich ausweichen kann. Die Nachgiebigkeit des Beschlagteils kann daher groß ausgelegt werden, damit sich bei angelegtem Gurt ein optimaler Gurtbandverlauf einstellen kann.

Bei der in Figur 2 gezeigten Ausführungsform ist das Abstützteil 28 relativ kurz ausgeführt, so daß der Hebelarm H von der Mitte der Schraube 20 zur Berührlinie am gurtschloßseitigen Ende 30 kleiner als in der in Figur 1 gezeigten Ausführungsform ist. Dadurch ergibt sich in Richtung Y ein geringeres Biegewiderstandsmoment der Verankerung 10 als bei der in Figur 1 gezeigten Ausführungsform.

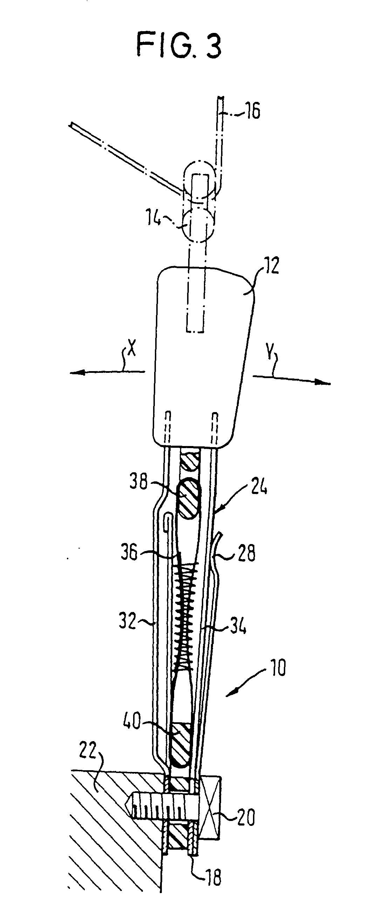

Die in Figur 3 gezeigte Ausführungsform der Verankerung unterscheidet sich von denen nach Figur 1 und 2 dadurch, daß das Beschlagteil 24 zwei im wesentlichen parallel zueinander verlaufende Stützelemente 32, 34 aufweist, zwischen denen sich ein zu einer Schlaufe geschlungenes Gurtband 36 erstreckt, das einerseits durch eine gurtschloßseitige, am Gurtschloß 12 angeformte Öse 38 und andererseits durch eine fahrzeugbodenseitige Öse 40 läuft.

An der in Richtung Y weisenden Seite des Stützelementes 34 liegt das Abstützteil 28 vorgespannt am Stützelement 34 an. Die Schraube 20 dient als gemeinsames Befestigungselement für das Abstützteil 28, das Stützelement 34, die Öse 40 und das Stützelement 32, um die dadurch gebildete Verankerung 10 am Fahrzeugsitzrahmen 22 oder direkt am Fahrzeugboden anzuschlagen. Das Gurtband 36, dessen gegenüberliegende Seiten zwischen den Ösen 38 und 40 aneinander befestigt sind, nimmt die im Rückhaltefall erzeugte Zugkraft im Sicherheitsgurt 16 auf, während die Stützelemente 32, 34 das Gurtschloß in aufrechter Stellung halten. Bei dieser Ausführungsform ist die Nachgiebigkeit der Verankerung 10 in Richtung X besonders groß.

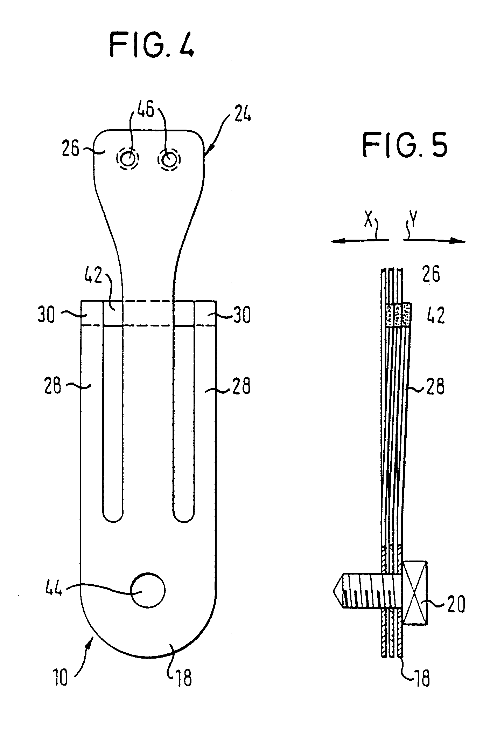

Bei der in den Figuren 4 und 5 gezeigten Ausführungsform hat die Verankerung 10 insgesamt die Form einer dreizinkigen Gabel, deren mittlerer, längerer Zinken das Beschlagteil 24 bildet und deren äußere Zinken an ihren gurtschloßseitigen Enden 30 durch einen Brückenabschnitt 42 miteinander verbunden sind. Der Brückenabschnitt 42, der eine Verlängerung des zweiteiligen Abstützteils 28 bildet, liegt am Beschlagteil 24 an, wie Figur 5 zu entnehmen ist. Die in Figur 4 gezeigte Verankerung 10 ist vorzugsweise ein Stanzteil aus einem ursprünglich ebenen Federblech, an das nur der Brückenabschnitt 42 befestigt werden muß. Da das Abstützteil 28 ohne den Brückenabschnitt 42 und das Beschlagteil 24 ursprünglich in einer Ebene gelegen sind, aus welcher aufgrund des Vorsehens des Brückenabschnitts 42 das Abstützteil 28 herausragt, liegt der Brückenabschnitt 42 stets vorgespannt am Beschlagteil 24 an, ohne daß es einer dauerhaften Verformung des Abstützteils 28 bedarf.

Die in den Figuren 4 und 5 gezeigte Verankerung 10 kann einschichtig aufgebaut sein oder aus mehreren aneinanderliegenden Stanzteilen gebildet sein, so daß sich ein Blattfederpaket ergibt.

Zum Einbauen der Verankerung 10 ist eine Öffnung 44 am fahrzeugbodenseitigen Ende 18, und zum Befestigen des Gurtschlosses 12 sind Gewindebohrungen 46 am gurtschloßseitigen Ende 26 vorgesehen.

Auch bei dieser Ausführungsform ist das Biegewiderstandsmoment durch das Abstützteil 28 in Richtung Y, d.h. vom Fahrzeugsitz weg, hoch, wogegen es in Richtung X relativ niedrig ist.

Aus optischen sowie aus sicherheitstechnischen Gründen kann die Verankerung 10 in jeder der gezeigten Ausführungsformen mit einem Schrumpfschlauch überzogen sein.

## Patentansprüche

1. Verankerung (10) für ein neben einem Fahrzeugsitz angeordnetes, seitlich auslenkbares Gurtschloß (12) in einem Sicherheitsgurtsystem, mit einem biegsamen Beschlagteil (24), an dessen einem Ende der Schloßkopf befestigt ist und dessen anderes Ende am Fahrzeug befestigt ist, dadurch gekennzeichnet, daß das Beschlagteil (24) zwischen einer Grundstellung bei nicht in den Schloßkopf eingerasteter Steckzunge und einer bei in den Schloßkopf eingerasteter Steckzunge an den Fahrzeugsitz angenäherten Stellung derart elastisch auslenkbar ist, daß das Beschlagteil (24) seiner Auslenkung zum Fahrzeugsitz hin einen geringeren Widerstand entgegensetzt als vom Fahrzeugsitz fort.

2. Verankerung nach Anspruch 1, dadurch gekennzeichnet, daß das Beschlagteil (24) auf seiner vom Fahrzeugsitz abgewandten Seite an einem elastisch auslenkbaren Abstützteil (28) abgestützt ist.

3. Verankerung (10) nach Anspruch 2, dadurch gekennzeichnet, daß das Abstützteil (28) mit Vorspannung am Beschlagteil (24) anliegt.

4. Verankerung (10) nach Anspruch 2 oder 3, dadurch gekennzeichnet, daß das Abstützteil (28) als Blattfeder ausgebildet ist.

5. Verankerung (10) nach einem der Ansprüche 2 bis 4, dadurch gekennzeichnet, daß das Beschlagteil (24) und das Abstützteil (28) jeweils für sich und/oder zusammen ein Blattfederpaket bilden und daß das Abstützteil (28) nur an seinem fahrzeugbodenseitigen Ende an das Beschlagteil (24) gekoppelt ist und mit seinem gurtschloßseitigen Ende (30) am Beschlagteil (24) anliegt.

6. Verankerung (10) nach Anspruch 5, dadurch gekennzeichnet, daß das gurtschloßseitige Ende (30) des Abstützteils (28) zum Beschlagteil (24) hin gerundet ist.

7. Verankerung (10) nach einem der Ansprüche 2 bis 6, dadurch gekennzeichnet, daß das Beschlagteil (24) und das Abstützteil (28) an ihren fahrzeugbodenseitigen Enden (18) einstückig miteinander verbunden sind.

8. Verankerung (10) nach Anspruch 7, dadurch gekennzeichnet, daß das Beschlagteil (24) mit dem Abstützteil (28) die Form einer dreizinkigen Gabel hat, deren mittlerer, längerer Zinken das Beschlagteil (24) bildet und deren äußere Zinken an ihren gurtschloßseitigen Enden (30) durch einen Brückenabschnitt (42) miteinander verbunden sind, der am Beschlagteil (24) anliegt und mit den äußeren Zinken das Abstützteil (28) bildet.

9. Verankerung (10) nach einem der Ansprüche 1 bis 6, dadurch gekennzeichnet, daß das Beschlagteil (24) mindestens ein elastisch auslenkbares Stützelement (32, 34), das das Gurtschloß (12) in einer aufrechten Stellung hält, sowie eine Gurtbandschlaufe umfaßt, die einerseits am Gurtschloß (12) und andererseits an einem fahrzeugfesten Teil befestigt ist.

10. Verankerung (10) nach einem der vorstehenden Ansprüche, dadurch gekennzeichnet, daß sie mit einem Schrumpfschlauch überzogen ist.

## Claims

1. An anchorage (10) for a laterally deflectable belt buckle (12) arranged alongside a vehicle seat in a seat belt system, the anchorage comprising a flexible fitting (24), to the one end of which the buckle head is secured and the other end of which is secured to the vehicle, characterized in that the fitting (24) is elastically deflectable between a basic position in which the insert tongue is not latched in place in the buckle head and a position approximated to the vehicle seat in which the insert tongue is latched in place in the buckle head such that any deflection of the fitting (24) towards the vehicle seat is opposed by less resistance than away from the vehicle seat.

2. The anchorage according to claim 1, characterized in that the fitting (24) is supported by an elastically deflectable supporting part (28) at its side facing away from the vehicle seat.

3. The anchorage (10) according to claim 2, characterized in that the supporting part (28) contacts the fitting (24) in a biased condition.

4. The anchorage (10) according to claim 2 or 3, characterized in that the supporting part (28) is configured as a leaf spring.

5. The anchorage (10) according to any of claims 2 to 4, characterized in that the fitting (24) and the supporting part (28) each and/or together form a leaf spring pack and that the supporting part (28) is coupled to the fitting (24) merely at its vehicle floor end and contacts the fitting (24) by its belt buckle end (30).

6. The anchorage (10) according to claim 5, characterized in that the belt buckle end (30) of the supporting part (28) is rounded in the direction of the fitting (24).

7. The anchorage (10) according to any of claims 2 to 6, characterized in that the fitting (24) and the supporting part (28) are integrally joined to each other at their vehicle floor ends (18).

8. The anchorage (10) according to claim 7, characterized in that the fitting (24) with the supporting part (28) has the shape of a three-pronged fork, the middle longer prong of which forms the fitting (24) and the outer prongs of which are joined to each other at their belt buckle ends (30) by a bridging section (42) which is in contact with the fitting (24) and together with the outer prongs forms the supporting part (28).

9. The anchorage (10) according to any of claims 1 to 6, characterized in that the fitting (24) includes at least one elastically deflectable supporting element (32, 34) which maintains the belt buckle (12) in an upright position, and a belt webbing loop which is secured on the one hand to the belt buckle (12) and, on the other, to a vehicle-fixed part.

10. The anchorage (10) according to any of the preceding claims, characterized in that it is sheathed in a shrinkage tubing.

## Revendications

1. Ancrage (10) pour une serrure de ceinture (12), dans un système de ceinture de sécurité, agencée à côté d'un siège de véhicule et qui peut être déviée latéralement, comportant une pièce d'armature (24) flexible, sur une extrémité de laquelle est fixée la tête de serrure et dont l'autre extrémité est fixée au véhicule, caractérisé en ce que la pièce d'armature (24) peut être déviée élastiquement entre une position de base, lorsque la langue d'emboîtement n'est pas enclenchée dans la tête de serrure, et une position rapprochée du siège du véhicule, lorsque la langue d'emboîtement est enclenchée dans la tête de serrure de telle sorte que la pièce d'armature (24) oppose à sa déviation en direction du siège de véhicule une résistance plus faible qu'en éloignement du siège de véhicule.

2. Ancrage (10) selon la revendication 1, caractérisé en ce que la pièce d'armature (24) prend appui par son côté détourné du siège de véhicule sur une pièce d'appui (28), qui peut être déviée élastiquement.

3. Ancrage (10) selon la revendication 2, caractérisé en ce que la pièce d'appui (28) repose sous précontrainte sur la pièce d'armature (24).

4. Ancrage (10) selon la revendication 2 ou 3, caractérisé en ce que la pièce d'appui (28) est réalisée sous forme de lame de ressort.

5. Ancrage (10) selon l'une quelconque des revendications 2 à 4 caractérisé en ce que la pièce d'armature (24) et la pièce d'appui (28) forment chacune en soi et/ou ensemble un paquet de lames de ressort et en ce que la pièce d'appui (28) n'est accouplée à la pièce d'armature (24) qu'à son extrémité située du côté du plancher du véhicule, et repose sur la pièce d'armature (24) par son extrémité (30) située du côté de la serrure de ceinture.

6. Ancrage (10) selon la revendication 5, caractérisé en ce que l'extrémité (30), située du côté de la serrure de ceinture, de la pièce d'appui (28) est arrondie vers la pièce d'armature (24).

7. Ancrage (10) selon l'une quelconque des revendications 2 à 6, caractérisé en ce que la pièce d'armature (24) et la pièce d'appui (28) sont reliées d'une seule pièce l'une à l'autre à leurs extrémités (18) situées du côté du plancher du véhicule.

8. Ancrage (10) selon la revendication 7, caractérisé en ce que la pièce d'armature (24) a, avec la pièce d'appui (28), la forme d'une fourche à trois dents, dont la dent centrale, la plus longue, constitue la pièce d'armature (24) et dont les dents extérieures sont reliées l'une à l'autre à leurs extrémités (30) situées du côte de la serrure de ceinture, par une section de pontage (42) qui repose sur la pièce d'armature (24) et forme avec les dents extérieures la pièce d'appui (28).

9. Ancrage (10) selon l'une quelconque des revendications 1 à 6, caractérisé en ce que la pièce d'armature (24) comprend au moins un élément d'appui (32, 34) qui peut être dévié élastiquement et qui maintient la serrure de ceinture (12) dans une position droite, ainsi qu'une boucle de sangle de ceinture, qui est fixée d'une part à la serrure de ceinture (12) et d'autre part à une partie fixe du véhicule.

10. Ancrage (10) selon l'une quelconque des revendications précédentes, caractérisé en ce qu'il est recouvert d'une gaine rétractable.
